# EUROPÄISCHE PATENTSCHRIFT

(11) **EP 3 302 847 B1**
(45) Veröffentlichungstag und Bekanntmachung des Hinweises auf die Patenterteilung: **17.04.2019**
(21) Anmeldenummer: 16745609.4
(22) Anmeldetag: 17.05.2016
(51) Int. Cl.: B21D 39/04, B21D 26/045, B21D 26/051, B21C 37/15, F16L 9/18

(54) **VERFAHREN UND VORRICHTUNG ZUR HERSTELLUNG VON BIMETALLROHREN**
METHOD AND DEVICE FOR PRODUCING BIMETALLIC PIPES
PROCÉDÉ ET DISPOSITIF DE FABRICATION DE TUBES BIMÉTALLIQUES

(30) Priorität: 29.05.2015 DE 102015108500
(43) Veröffentlichungstag der Anmeldung: 11.04.2018
(73) Patentinhaber: Mannesmann Line Pipe GmbH, 57074 Siegen (DE)
(72) Erfinder: WINKELS, Jörn, 59457 Werl (DE); KOCKS, Hans-Jürgen, 57258 Freudenberg (DE)
(74) Vertreter: Meissner, Peter E.
(86) Internationale Anmeldenummer: PCT/DE2016/100226
(87) Internationale Veröffentlichungsnummer: WO 2016/192709

(56) Entgegenhaltungen:
- EP-A1- 0 673 697
- DE-A1-102007 045 855
- DE-A1-102010 044 463
- JP-A- S58 107 225

## Beschreibung

Die Erfindung betrifft ein Verfahren zur Herstellung von Bimetallrohren, bestehend aus einem dünnwandigen Innenrohr aus hochlegierten oder legierten Stahl und einem Außenrohr aus nicht- oder unlegierten Stahl, die nach dem Ineinanderschieben formschlüssig miteinander verbunden werden, sowie eine Vorrichtung zur Durchführung des Verfahrens.

Bimetallrohre zeichnen sich üblicherweise dadurch aus, dass ein, die Statik übernehmendes Rohr aus unlegierten oder niedriglegiertem Stahl mit einer Innenschicht aus legiertem Stahl versehen ist. Zur Herstellung von Bimetallrohren sind "Cladded Pipes" von "Lined Pipes" zu unterscheiden.

Im Falle der "Cladded Pipes" besteht ein metallurgischer Verbund zwischen dem unlegierten bzw. niedriglegiertem Stahl und der Schicht aus legiertem oder hochlegiertem Stahl. Ein typischen Herstellverfahren ist hier das Plasmaauftragsschweißen.

Im Falle des "Lined Pipe" wird im einfachsten Fall ein dünnwandiges Rohr aus hochlegiertem bzw. legiertem Stahl in das Rohr aus niedrig- oder unlegiertem Stahl eingeschoben. Ein formschlüssiger Verbund entsteht hier durch das gezielte Aufweiten des Edelstahlrohres durch Innendruck. Das Rohr wird dazu an den Enden mit Dichtköpfen verschlossen und mit Wasser gefüllt. Durch Erhöhung des Innendrucks und dem gleichzeitigen Nachführen von Wasser weitet sich das Rohr. Bei diesem Aufweitprozess hat das Rohr aus legiertem oder hochlegiertem Stahl das Bestreben sich zusammenzuziehen. Das Material für die Aufweitung stammt zum Teil aus dem Umfang, zum Teil aber auch aus der Rohrlänge. Derartige Prozesse erfordern daher entweder das Verschweißen der beiden Rohre oder aber das Nachfahren der Dichteinheit, wobei die Rohre in der Herstelllänge auf diesen Prozess abgestimmt werden müssen.

Ein Beispiel für ein Herstellungsverfahren, bei dem das Aufweiten und Verbinden durch hydraulischen Innendruck erfolgt, ist aus der gattungsbildenden DE 10 2010 044 463 A1 bekannt.

Wesentlich ist dabei, dass der Druck und die Durchmesser der beiden Rohre so aufeinander abgestimmt werden, dass es gleichzeitig sowohl zu einer plastisch aufweitenden Verformung des Innenrohres wie auch zu einer elastisch aufweitenden Verformung des Außenrohres kommt.

Durch die elastische Rückfederung des äußeren Rohres entsteht dann eine kraftschlüssige Schrumpfverbindung.

Für die Druckeinleitung müssen die Rohrenden dicht verschlossen werden, wobei im Allgemeinen vorher zur Fixierung der ineinandergeschobenen Rohre die Enden mit einander verschweißt werden.

Aufgabe der Erfindung ist, das Herstellen von Bimetallrohren zu vereinfachen.

Erfindungsgemäß geschieht dies bei einem Verfahren zur Herstellung von Bimetallrohren, bestehend aus einem dünnwandigen Innenrohr aus hochlegierten oder legierten Stahl und einem Außenrohr aus nicht- oder unlegierten Stahl, die nach dem Ineinanderschieben durch Aufweiten unter Innendruck formschlüssig miteinander verbunden werden,
dadurch, dass das eine größere Länge als das Außenrohr aufweisende Innenrohr nach dem Einschieben in das Außenrohr aber vor dem Aufweiten nahe seinen beiden über die Länge des Außenrohres vorstehenden Rohrenden mit einer radial nach Innen weisenden Umfangsnut versehen wird, mit der eine die axiale Lage des Innenrohres gegenüber dem Außenrohr beim Aufweiten fixierende Halterung in Eingriff bringbar ist.

Kerngedanke dieser Idee ist es, das Edelstahlrohr vor dem Aufweiten an den Rohrenden zu nuten. Diese Nut verhindert einerseits, dass sich das Rohr unter Innendruck im Dichtkopf aufweitet und so ggf. nur schwer wieder herauszuziehen ist. Andererseits bietet die Nut die Möglichkeit das Edelstahlrohr an der Dichteinheit so zu fixieren, sodass das Material für die Aufweitung komplett aus dem Rohrumfang bereit gestellt wird. Es kommt somit bei gleichbleibender Rohrlänge nur zu einer Wanddickenabnahme des aufzuweitenden Innenrohres.

Die Erfindung betrifft ferner eine Vorrichtung zur Durchführung des Verfahrens mit den Merkmalen des Anspruchs 2. Bevorzugte Ausführungsbeispiele dieser Vorrichtung sind in den abhängigen Ansprüchen 3 bis 6 definiert.

Wie eingangs erwähnt, werden für das hydraulische Aufweiten Druckköpfe an beiden Enden der aufzuweitenden Rohre angeordnet, durch die das Druckmedium dem Innenrohr zugeführt wird. Dazu werden aus dem Bereich der Wasserprüfpressen für Rohre bekannte Abdichteinheiten verwendet. Hier erfolgt die Abdichtung gegenüber dem Innenrohr durch im Dichtkopf vorgesehene, am Innenrohr anliegende Dichtungen.

Am Dichtkopf ist erfindungsgemäß eine Halterrung zum Fixieren des Innenrohres angeordnet, und zwar vorzugsweise lösbar. Damit kann bei entsprechender Ausbildung des Dichtkopfes diese Halterung auch nachträglich angebracht werden.

Diese Halterung weist einen radial nach innen weisenden, der Form der Umlaufnut entsprechenden Vorsprung auf, der mit der Umlaufnut in Eingriff bringbar ist.

Damit kann das Innenrohr gegenüber dem Außenrohr axial fixiert werden, wenn das Innenrohr in den Druckköpfen eingespannt ist und ein Druck zum Aufweiten aufgebracht wird.

Durch den Druck weitet sich das Innenrohr zwischen den beiden Fixierungen auf, wobei der Materialfluß aus der Wand kommt, während sich die Länge nicht ändert. Ein Nachführen der Dichtköpfe ist damit nicht mehr notwendig.

Eine alternative Anwendungsmöglichkeit dieser Nut bietet die Fixierung einer horizontal verschiebbaren Halterung, deren Position vor dem Dichtkopf durch einen Näherungssensor erfasst wird. Damit kann die Dichteinheit ggf. einer Längenänderung folgen, wenn abweichend von der zuvor beschriebenen Zielsetzung der Materialfluss nicht nur aus der Rohrwand, sondern auch durch die Verkürzung der Rohrlänge zugelassen wird.

Da sich der Durchmesser des Innenrohres aufgrund der Stützwirkung der Nut im Dichtkopf nicht ändert, kann das Innenrohr nach Abschluss des Aufweitevorganges leicht aus dem Dichtkopf entfernt werden.

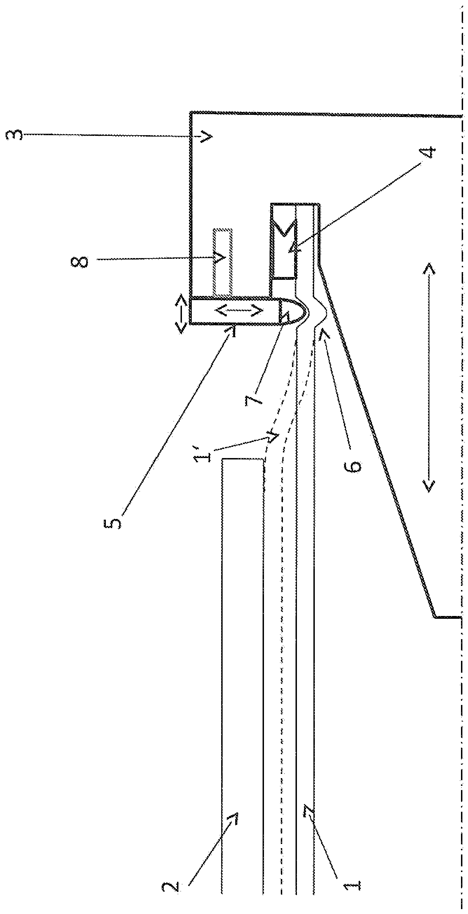

Aus der schematischen Darstellung in der Zeichnung ergibt sich das Verfahren und die Ausführung der Vorrichtung in einfacher Weise.

Im Einzelnen ist dabei das Innenrohr im ursprünglichen Zustand mit 1, im aufgeweiteten Zustand mit 1' und das Außenrohr mit 2 bezeichnet.

Von den beidseitig angeordneten Dichtköpfen ist nur der auf einer Seite angeordnete Dichtkopf angedeutet und mit 3 bezeichnet. Die Dichtung, die am Innenrohr anliegt, ist mit dem Bezugszeichen 4 versehen.

Am Dichtkopf ist die lösbare Halterung 5 angedeutet, die einen radial nach Innen weisenden, umlaufenden und der Umfangsnut 6 entsprechenden Vorsprung 7 aufweist.

Diese Halterung 5 ist außerdem am Dichtkopf relativ zu diese sowohl vertikal verschiebbar wie auch - nach einer alternativen Ausgestaltung - horizontal verschiebbar.

Die mit dem vertikalen Doppelpfeil angedeutete Verschiebungsmöglichkeit erlaubt ein einfaches herausziehen des Bimetallrohres aus dem Dichtkopf nach dem Aufweiten.

Durch die ggf. zusätzliche horizontale Verschiebungsmöglichkeit, die ebenfalls durch einen Doppelpfeil angedeutet ist, kann die Halterung 5 horizontal nachgeführt werden, wenn sich das Rohr beim Aufweiten verkürzt. Über den Näherungssensor 8 wird dazu der Dichtkopf der sich mit der Rohrverkürzung fortbewegenden Halterung nachgefahren, um die Dichtfunktion weiter zu gewährleisten.

Das erfindungsgemäße Verfahren und die Vorrichtung zur Durchführung des Verfahrens sind beispielsweise besonders geeignet für Außenrohre von 100 bis 600 mm Durchmesser und Wanddicken von 2,9 bis 25 mm und Innenrohre mit 70 bis 570 mm Durchmesser und einer Wanddicke von 3,0 bis 5,0 mm.

## Patentansprüche

1. Verfahren zur Herstellung von Bimetallrohren, bestehend aus einem dünnwandigen Innenrohr (1) aus hochlegiertem oder legiertem Stahl und einem Außenrohr (2) aus nicht- oder unlegiertem Stahl, die nach dem Ineinanderschieben durch Aufweiten unter Innendruck formschlüssig miteinander verbunden werden,
**dadurch gekennzeichnet,**
**dass** das eine größere Länge als das Außenrohr (2) aufweisende Innenrohr (1) nach dem Einschieben in das Außenrohr (2), aber vor dem Aufweiten nahe seinen beiden über die Länge des Außenrohres (2) vorstehenden Rohrenden mit einer radial nach Innen weisenden Umfangsnut (6) versehen wird, mit der eine die axiale Lage des Innenrohres (1) gegenüber dem Außenrohr (2) beim Aufweiten fixierende Halterung (5) in Eingriff bringbar ist.

2. Vorrichtung zur Durchführung des Verfahrens nach Anspruch 1, mit an die aufzuweitenden Rohre (1;2) anlegbaren Dichtköpfen (3) zur Zuführung des Druckmediums, **dadurch gekennzeichnet, dass** am Dichtkopf (3) eine einen radial nach innen weisenden Vorsprung (7) aufweisende Halterung (5) zur Fixierung des aufzuweitenden Innenrohres (1,1') vorgesehen ist, der mit einer Umfangsnut (6) am Innenrohr (1;1') in Eingriff bringbar ist.

3. Vorrichtung nach Anspruch 2, **dadurch gekennzeichnet, dass** die Halterung (5) relativ zum Dichtkopf (3) vertikal verschiebbar am Dichtkopf (3) angeordnet ist.

4. Vorrichtung nach einem der vorstehenden Ansprüche, **dadurch gekennzeichnet, dass** die Halterung (5) relativ zum Dichtkopf (3) horizontal verschiebbar am Dichtkopf angeordnet ist.

5. Vorrichtung nach Anspruch 4, **dadurch gekennzeichnet, dass** am Dichtkopf (3) ein Näherungssensor (8) zur Erfassung der horizontalen Position der Halterung (5) angeordnet ist.

6. Vorrichtung nach den Ansprüchen 2 bis 5, **dadurch gekennzeichnet, dass** die Halterung (5) am Dichtkopf (3) lösbar befestigt ist.

## Claims

1. Method for producing bimetallic pipes consisting of a thin-walled inner pipe (1) made of high-alloyed or alloyed steel and an outer pipe (2) made of non-alloyed or unalloyed steel, which pipes, after being inserted one into the other, are connected to one another in a form-fitting manner by expansion under internal pressure,
**characterized in that**,
after being inserted into the outer pipe (2) but prior to the expansion, the inner pipe (1), which has a greater length than the outer pipe (2), is provided with a radially inwardly pointing circumferential groove (6) close to the two pipe ends thereof that protrude beyond the length of the outer pipe (2), with which groove a securing means (5) can be brought into engagement, said securing means fixing the axial position of the inner pipe (1) relative to the outer pipe (2) during the expansion.

2. Device for carrying out the method according to claim 1, comprising sealing heads (3) for supplying the pressure medium, which can be placed against the pipes (1; 2) to be expanded, **characterized in that** a securing means (5) for fixing the inner pipe (1, 1') to be expanded is provided on the sealing head (3), said securing means comprising a radially inwardly pointing protrusion (7) which can be brought into engagement with a circumferential groove (6) on the inner pipe (1; 1').

3. Device according to claim 2, **characterized in that** the securing means (5) is arranged on the sealing head (3) in such a way as to be vertically displaceable relative to the sealing head (3).

4. Device according to one of the preceding claims, **characterized in that** the securing means (5) is arranged on the sealing head in such a way as to be horizontally displaceable relative to the sealing head (3).

5. Device according to claim 4, **characterized in that** a proximity sensor (8) for detecting the horizontal position of the securing means (5) is arranged on the sealing head (3).

6. Device according to claims 2 to 5, **characterized in that** the securing means (5) is fastened to the sealing head (3) in a detachable manner.

## Revendications

1. Procédé de fabrication de tubes bimétalliques, constitués d'un tube interne (1) à paroi fine en acier allié ou fortement allié et d'un tube externe (2) en acier non allié qui, après emboîtage, sont assemblés par concordance de forme par élargissement sous pression interne,
**caractérisé en ce que**, après l'introduction dans le tube externe (2) mais avant l'élargissement, le tube interne (1) présentant une plus grande longueur que le tube externe (2) est muni, près de ses deux extrémités de tube dépassant de la longueur du tube externe (2), d'une rainure périphérique (6) qui est dirigée de façon radiale vers l'intérieur et avec laquelle peut être mise en prise une fixation (5) fixant la position axiale du tube interne (1) par rapport au tube externe (2) lors de l'élargissement.

2. Dispositif de mise en oeuvre du procédé selon la revendication 1, avec des têtes étanches (3) pouvant être placées contre les tubes (1 ; 2) à élargir et destinées à l'alimentation en fluide de pression, **caractérisé en ce qu'**il est prévu au niveau de la tête étanche (3) une fixation (5) qui présente une partie en saillie (7) dirigée de façon radiale vers l'intérieur et qui est destinée à fixer le tube interne (1, 1') à élargir et qui peut être mise en prise avec une rainure périphérique (6) au niveau du tube interne (1, 1').

3. Dispositif selon la revendication 2, **caractérisé en ce que** la fixation (5) est agencée au niveau de la tête étanche (3) de manière à être mobile verticalement par rapport à la tête étanche (3).

4. Dispositif selon l'une quelconque des revendications précédentes, **caractérisé en ce que** la fixation (5) est agencée au niveau de la tête étanche de manière à être mobile horizontalement par rapport à la tête étanche (3).

5. Dispositif selon la revendication 4, **caractérisé en ce qu'**un capteur de proximité (8) est agencé au niveau de la tête étanche (3) afin de détecter la position horizontale de la fixation (5).

6. Dispositif selon les revendications 2 à 5, **caractérisé en ce que** la fixation (5) est fixée de manière amovible à la tête étanche (3).
